# EUROPEAN PATENT SPECIFICATION

(11) **EP 2 472 075 B1**
(45) Date of publication and mention of the grant of the patent: **17.09.2014**
(21) Application number: 10811395.2
(22) Date of filing: 10.03.2010
(51) Int. Cl.: F01L 13/00, B62K 11/00, B62K 11/04, F01L 1/26

(54) **VARIABLE VALVE DEVICE, ENGINE WITH SAME, AND SADDLED VEHICLE**
VARIABLE VENTILVORRICHTUNG, MOTOR DAMIT UND SATTELFAHRZEUG
DISPOSITIF DE SOUPAPE VARIABLE, MOTEUR COMPORTANT CE DISPOSITIF ET VÉHICULE À SELLE

(30) Priority: 24.08.2009 JP 2009193223
(43) Date of publication of application: 04.07.2012
(73) Proprietor: Yamaha Hatsudoki Kabushiki Kaisha, Iwata-shi, Shizuoka 438-8501 (JP)
(72) Inventor: NAGAI, Yoshitaka, Iwata-shi Shizuoka 438-8501 (JP); FUNAKUSHI, Hironori, Iwata-shi Shizuoka 438-8501 (JP)
(74) Representative: Grünecker, Kinkeldey, Stockmair & Schwanhäusser
(86) International application number: PCT/JP2010/001709
(87) International publication number: WO 2011/024335

(56) References cited:
- EP-A1- 2 050 933
- DE-A1- 3 931 430
- JP-A- 10 110 610
- JP-A- 2001 197 605
- JP-A- 2001 355 552
- JP-A- 2009 085 133
- US-A- 5 524 580
- US-A- 5 697 333
- US-A- 5 960 755
- US-B1- 6 318 318

## Description

### [TECHNICAL FIELD]

The present invention relates to a variable valve apparatus, in an internal combustion engine having valves, for controlling opening and closing of the valves, and an engine and a saddle riding type vehicle having the same, and more particularly to a technique for switching a plurality of rocker arms.

### [BACKGROUND ART]

Conventionally, this type of variable valve apparatus (first apparatus), for example, includes two rocker arms, an output link, a connection link, an actuator plate, an armature, a spring and a solenoid coil (see Patent Document 1, for example). The two rocker arms switch amounts of lift of valves, for example. The output link switches between the two rocker arms. The connection link rocks the output link. The actuator plate drives the connection link. The armature is formed of a magnetic body which is attached to, and projects from, the lower surface of the actuator plate. The spring biases (i.e. applies a force to) the actuator plate to an upper projecting position. The solenoid coil magnetically attracts the armature to move the actuator plate to a lower position.

With the first apparatus constructed as above, when the solenoid coil is de-energized, the actuator plate is maintained in the upper position to place the output link in an inoperative state. Therefore, one of the rocker arms is placed in an operative state to lift the valve. And when the solenoid coil is energized, the armature is attracted by an electromagnetic attraction greater than the biasing force of the spring, which moves the actuator plate to the lower position. Therefore, the output link is operated through the connection link, to place the other rocker arm in an operative state to lift the valve. Thus, the two rocker arms are switched by switching the solenoid coil between de-energization and energization.

Another variable valve apparatus (second apparatus), for example, includes two rocker arms, an actuating piece, a solenoid coil, a spring and a permanent magnet (see Patent Document 2, for example). The two rocker arms switch amounts of lift of valves, for example. The actuating piece is movable forward and backward to switch between the two rocker arms. The solenoid coil drives the actuating piece to move forward and backward. The spring is disposed between the solenoid coil and actuating piece to bias the actuating piece toward the rocker arms. The permanent magnet is disposed on a part of the actuating piece facing the rocker arms.

With the second apparatus constructed as above, when the solenoid coil is de-energized, the actuating piece is moved forward toward the rocker arms by the biasing force of the spring. Therefore, one of the rocker arms is placed in an operative state to lift the valve. And when the solenoid coil is energized, the actuating piece is attracted by electromagnetic attraction of the solenoid coil, to move backward away from the rocker arms. Therefore, the other rocker arm is placed in an operative state to lift the valve. Even if the energization of the solenoid coil is canceled at this time, the state of the actuating piece moved backward is maintained by electromagnetic attraction of the permanent magnet. In order to cancel the state of the actuating piece moved backward and move the actuating piece forward toward the rocker arms, the solenoid coil is temporarily excited to move the actuating piece in the opposite direction. In this way, the two rocker arms are switched.

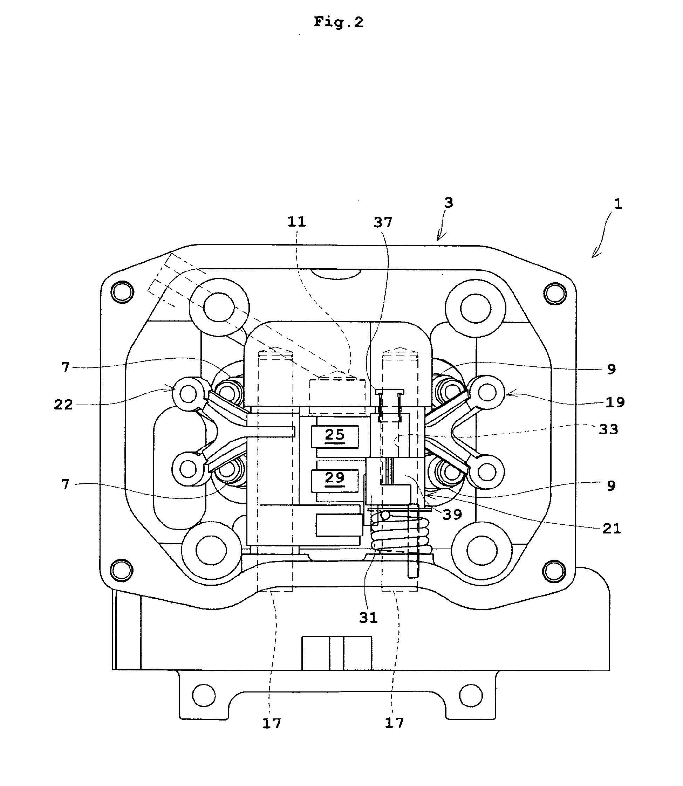

[Patent Document 1]
   Unexamined Patent Publication H10-110610 (Figs. 1 - 4)
[Patent Document 2]
   Patent National Publication No. 2008-530424 (Fig. 2)

### [DISCLOSURE OF THE INVENTION]

### [PROBLEM TO BE SOLVED BY THE INVENTION]

However, the conventional examples with such constructions have the following drawbacks.

With the conventional first apparatus, in order to keep the other rocker arm in contact with the valve, it is necessary to continue energizing the solenoid coil. Therefore, there is a problem of consuming electric power when keeping the other rocker arm in contact with the valve. With such consumption of electric power, increased drive is used in power generation for the variable valve apparatus, which increases engine's fuel consumption.

The conventional second apparatus, unlike the above first apparatus, uses attraction by the permanent magnet, and thus does not consume electric power to keep the other rocker arm in contact with the valve. However, the permanent magnet has a characteristic that its magnetism lowers at times of high temperature. Moreover, the variable valve apparatus is very close to sites which become high in temperature, and it is extremely difficult to take heat insulation measures. Even if heat insulation measures are provided, it is inevitable that the structure will be complicated and high cost. That is, the second apparatus, although free from the problem of the first apparatus noted above, has a different problem of very low implementability.

The present invention has been made having regard to the state of the art noted above, and its object is to provide a variable valve apparatus, and an engine and a saddle riding type vehicle having the same, which involve no power consumption for maintaining a state where rocker arms are switched, and which also have very high implementability.

### [MEANS FOR SOLVING THE PROBLEM]

To fulfill the above object, the present invention provides the following construction.

A first invention provides a variable valve apparatus for switching a plurality of rocker arms, comprising:
a connecting pin biased (i.e. a force is applied) in a backward direction away from the rocker arms, and driven forward to a rocker arm side to connect the plurality of rocker arms;
an actuator having an actuating piece, and operable to drive the actuating piece to one of a plurality of different positions; and
a state holding mechanism for driving the connecting pin to the rocker arm side in response to a position of the actuating piece, and holding the connecting pin in a forward position on the rocker arm side when the actuator is rendered inoperative.

[Function and Effect] According to the present invention, when the actuator is operated to switch between the rocker arms, the actuating piece is moved to a different position to move the connecting pin forward to the rocker arm side. At this time, when the actuator is put out of operation, the state holding mechanism can hold each position of the connecting pin. Therefore, there occurs no power consumption for maintaining the state where the rocker arms have been switched, and also measures against heat are unnecessary. This realizes a variable valve apparatus having very high implementability. The state holding mechanism may hold the position of the connecting pin also when the actuator is operated and the actuating piece is moving.

A second invention, preferably, provides that, in the first invention, the plurality of rocker arms are two;
the actuator is a push type or pull type electromagnetic solenoid, the electromagnetic solenoid having a function to move the actuating piece linearly in an axial direction, and when energized, driving the actuating piece to one of an initial position and an actuating position; and
the state holding mechanism has a knock rotating ratchet mechanism with a forward end member disposed at a forward end thereof, for moving the forward end member in response to the positions of the actuating piece, between an initial position and a forward position by way of a most forward position which is further forward than the forward position.

[Function and Effect] When the electromagnetic solenoid is energized to operate, the actuating piece is driven to one of the initial position and actuating position. At this time, in response to the position of the actuating piece, the forward end member of the knock rotating ratchet mechanism moves from the initial position to the forward position by way of the most forward position or from the forward position to the initial position by way of the most forward position. However, the position of the forward end member is held in the forward position by the ratchet even if the actuator piece returns to the other side. Moreover, when moving the forward end member to the forward position, what is necessary is only to turn ON the electromagnetic solenoid, and also when returning the forward end member from the forward position to the initial position, what is necessary is only to turn ON the electromagnetic solenoid. Therefore, it is not necessary to carry out complicated drive such as driving the electromagnetic solenoid in a different state in order to move the forward end member in a reverse direction, which can simplify control. As a result, the two rocker arms can be switched easily.

A third invention, preferably, provides that, in the first invention, the plurality of rocker arms are two;
the actuator is a rotary type electromagnetic solenoid for rotating the actuating piece about an axis thereof from an initial position to an actuating position; and
the state holding mechanism has a biasing device for biasing the actuating piece from the actuating position to the initial position, a cam shaft having cams in two directions and interlocked with rotation of the actuating piece, and a clutch interposed between the actuating piece and the cam shaft, for permitting rotation of the cams in a direction of rotation of the actuating piece, and prevents rotation of the cams in a direction opposite to the direction of rotation of the actuating piece.

[Function and Effect] When the rotary type electromagnetic solenoid is operated, the actuating piece is rotated about the axis thereof. This rotates the cam shaft in the same direction which causes the cams to move the connecting pin to the rocker arm side. The actuating piece, biased by the biasing device, returns to the initial position. With the clutch interposed between the actuating piece and the cam shaft, the cam shaft is maintained in the same position. Thus, each time the rotary type electromagnetic solenoid is operated, the cam shaft can be rotated to move the connecting pin forward to the rocker arm side and away from the rocker arms. Therefore, it is not necessary to carry out complicated drive such as driving the electromagnetic solenoid by electrically opposite polarity, which can simplify control. As a result, the rocker arm 19 for low speed and the rocker arm 21 for high speed can be switched easily. As a result, the two rocker arms can be switched easily.

A fourth invention, preferably, provides that, in the first invention to the third invention, a direction switching lever is disposed between the connecting pin and the state holding mechanism, and which has one end located adjacent the state holding mechanism and the other end located adjacent the connecting pin, the direction switching lever having an axis of rotation between the one end and the other end.

[Function and Effect] Since the direction switching lever is disposed between the connecting pin and state holding mechanism, an increased degree of freedom is provided for the attachment position of the actuator

A fifth invention provides an engine having the variable valve apparatus according to any one of the first to fourth inventions, wherein the actuator, preferably, is attached so that a plane perpendicular to an axis of a cylinder and an operating direction of the actuating piece become parallel, and is attached to the variable valve apparatus so that the operating direction of the actuating piece agree with a direction perpendicular to a main component direction of vibration produced by a piston/crank line of the engine.

[Function and Effect] Since the vibration from the engine is not in agreement with the operating direction of the actuator, this vibration can be prevented from exerting adverse influences on operation of the actuator.

A sixth invention provides an engine having the variable valve apparatus according to any one of the first to fourth inventions, wherein the actuator, preferably, is attached to the variable valve apparatus so that an operating direction of the actuating piece be located in a direction perpendicular to an axis of a cylinder.

[Function and Effect] In the case of a small displacement single cylinder engine, the direction of the axis of the cylinder is a main component direction of vibration of the engine. Therefore, this arrangement can prevent the vibration from exerting adverse influences on operation of the actuator.

A seventh invention provides a saddle riding type vehicle having the engine according to the fifth or sixth invention, wherein the actuator, preferably, is attached to the variable valve apparatus so that the operating direction of the actuating piece become parallel to a plane perpendicular to a direction in which a vehicle body vibrates at traveling times.

[Function and Effect] Since a load due to vibration occurring at the time of traveling is not in agreement to the operating direction of the actuator, this vibration can be prevented from exerting adverse influences on operation of the actuator.

An eighth invention, preferably, provides the engine according to the fifth or sixth invention;
a fuel tank for storing fuel;
a front wheel and a rear wheel; and
a transmission mechanism for transmitting power generated by the engine to the rear wheel.

[Function and Effect] Since drive of the engine used in driving the variable valve apparatus is reduced, fuel consumption of the vehicle can be improved.

The "saddle riding type vehicle" herein refers to a vehicle on which the rider is seated as straddling the saddle. Specifically, a two-wheeled motor vehicle, all-terrain vehicle and snowmobile are included. The two-wheeled motor vehicle includes a scooter on which the rider is seated with the feet close together, and a mopet (or also called moped).

### [EFFECTS OF THE INVENTION]

With the variable valve apparatus according to the present invention, when the actuator is operated to switch between the rocker arms, the actuating piece is moved to a different position to move the connecting pin forward to the rocker arm side. At this time, even if the actuator is put out of operation, the state holding mechanism can hold each position of the connecting pin. Therefore, there occurs no power consumption for maintaining the state where the rocker arms have been switched, and also measures against heat are unnecessary. This realizes a variable valve apparatus having very high implementability.

### [BRIEF DESCRIPTION OF THE DRAWINGS]

Fig. 1 is a view in vertical section showing an outline construction of a variable valve apparatus according to Embodiment 1;
Fig. 2 is a view in cross section showing the outline construction of the variable valve apparatus according to Embodiment 1;
Fig. 3 is a section taken on line A-A of Fig. 1;
Fig. 4 is a perspective view showing a principal portion;
Fig. 5 is a perspective view showing a state holding mechanism;
Fig. 6 is an exploded perspective view of the state holding mechanism;
Figs. 7 are views for illustrating operation of the state holding mechanism, in which (a) shows an initial position, (b) shows a transition position from the initial position, and (c) shows a most forward position;
Figs. 8 are views for illustrating operation of the state holding mechanism, in which (a) and (b) show transition positions from the most forward position, and (c) shows a forward position;
Figs. 9 are views showing an outline construction of a state holding mechanism according to Embodiment 2, in which (a) shows an initial position, (b) shows an action position (operative time), and (c) shows an action position (inoperative time);
Fig. 10 is a view showing an outline construction of an engine having the state holding mechanism according to Embodiment 1;
Fig. 11 is a view showing an outline construction of a two-wheeled motor vehicle having the engine of Fig. 10;
Figs. 12 are schematic views showing desirable example 1 of arrangement of an actuator, in which (a) shows a relationship with a vibrating direction of a vehicle body, and (b) shows a relationship with a vibrating direction of the engine;
Figs. 13 are schematic views showing desirable example 2 of arrangement of the actuator, in which (a) shows a relationship with a vibrating direction of a vehicle body, and (b) shows a relationship with a vibrating direction of an engine;
Figs. 14 are schematic views showing desirable example 3 of arrangement of the actuator, in which (a) shows a relationship with a vibrating direction of a vehicle body, and (b) shows a relationship with a vibrating direction of an engine; and
Figs. 15 are schematic views showing desirable example 4 of arrangement of the actuator, in which (a) shows a relationship with a vibrating direction of a vehicle body, and (b) shows a relationship with a vibrating direction of an engine.

### [Description of References]

- 1: variable valve apparatus
- 3: cylinder head
- 5: combustion chamber
- 11: cam shaft
- 13: cam for low speed
- 15: cam for high speed
- 16: cam
- 17: rocker shafts
- 19: rocker arm for low speed
- 21: rocker arm for high speed
- 22: rocker arm
- 23: lost motion spring
- 33: through-hole
- 35: compression coil spring
- 37: connector pin
- 39: engaging portion
- 41: actuator
- 43: state holding mechanism
- 45: direction switching lever
- 57: outer fixed tube
- 59: pressing member
- 61: rotating tube
- 63: forward end member
- 65: spring
- 67: deep grooves
- 69: inclined grooves
- 71: locking portions
- 73: pressing and sliding surfaces
- 75: locking lugs
- 91: engine
- 111: ECU
- 141: fuel tank
- 137: front wheel
- 145: power transmission system
- 147: rear wheel
- RV1: direction of vibration which a vehicle receives from a road surface at traveling times
- RV2: direction of vibration which an engine receives at traveling times
- EV1, EV2: main component directions of vibration due to a cylinder-crank line;
- CA: axis of a cylinder
- CP1: plane perpendicular to the axis of the cylinder
- CP2: plane perpendicular to the direction of vibration RV2
- OP: operating direction

### [BEST MODE FOR CARRYING OUT THE INVENTION]

A variable valve apparatus, an engine having this variable valve apparatus, and a two-wheeled motor cycle which is one example of saddle riding type vehicles having this engine, will be described in order hereinafter.

### <Variable Valve Apparatus> Embodiment 1

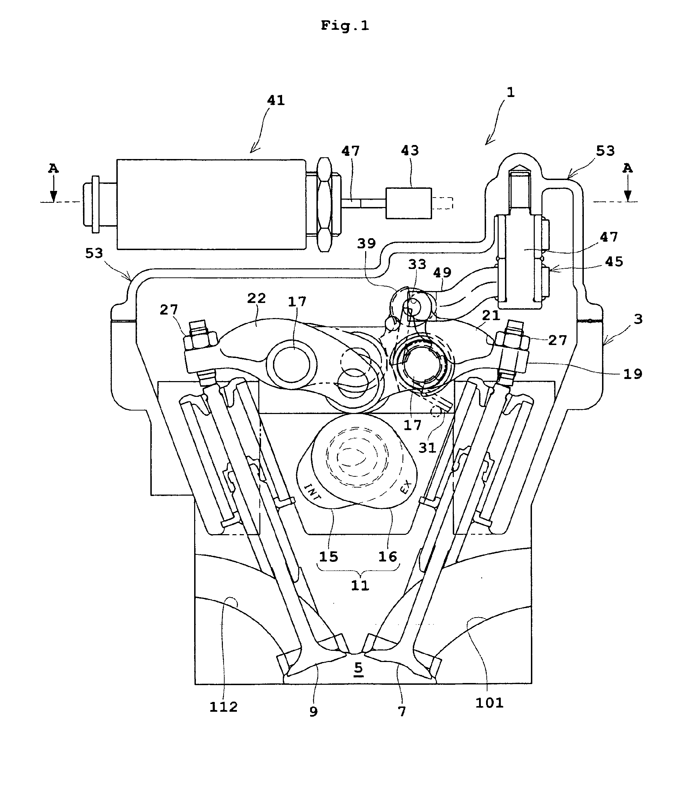

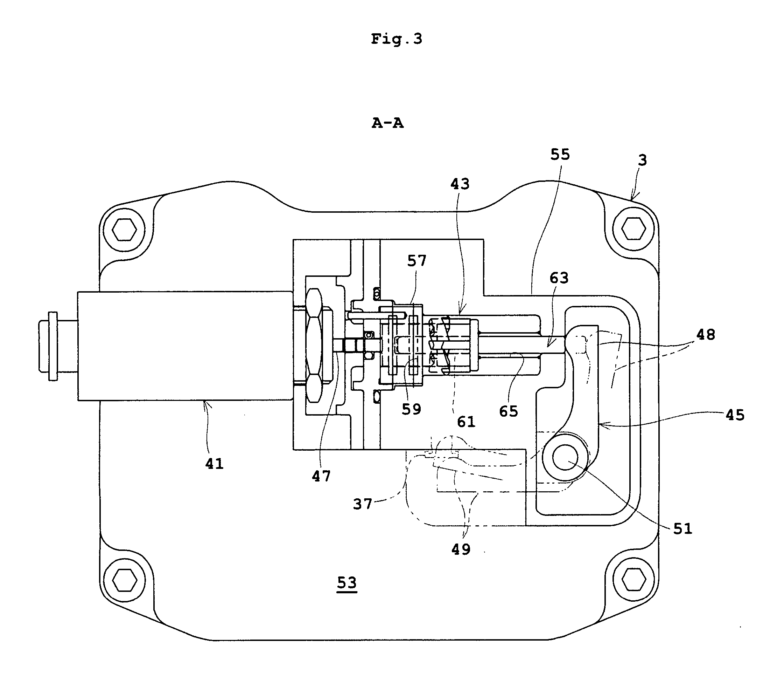

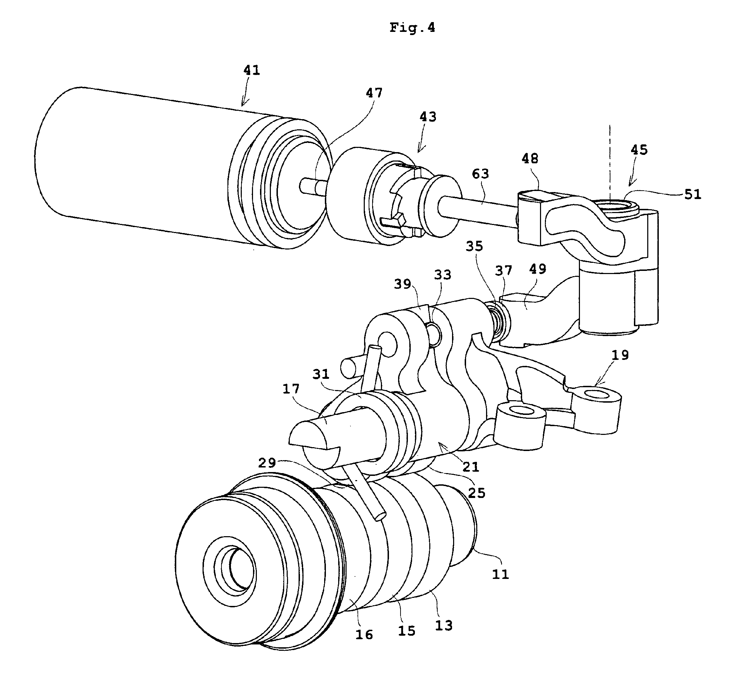

Fig. 1 is a view in vertical section showing an outline construction of a variable valve apparatus according to Embodiment 1. Fig. 2 is a view in cross section showing the outline construction of the variable valve apparatus according to Embodiment 1. Fig. 3 is a section taken on line A-A of Fig. 1. Fig. 4 is a perspective view showing a principal portion. In Fig. 4, a spring (65) to be described hereinafter is omitted.

A variable valve apparatus 1 described hereinafter is well suited for engines of small displacement. The small displacement here refers to about 100cc - 200cc, for example. However, the present invention can be applied also to engines of medium and larger displacements. The present invention is applicable also to single-cylinder engines and multicylinder engines.

The variable valve apparatus 1 is arranged in an upper portion of a cylinder head 3. The cylinder head 3 is attached to the top of a cylinder not shown. The cylinder head 3 has a combustion chamber 5 in a lower portion thereof. This combustion chamber 5 has, formed in upper surfaces thereof, an inlet port 101 and an exhaust port 112 connected for communication with lateral positions of the cylinder head 3. Two inlet valves 7 and exhaust valves 9 are arranged in each of the ports. Although not shown, a piston is disposed under the cylinder head 3, which reciprocates in up-and-down directions in Fig. 1.

The cylinder head 3 has one cam shaft 11. This cam shaft 11 has a cam 13 for low speed and a cam 15 for high speed on the inlet side, and a cam 16 on the exhaust side. Rocker shafts 17 are arranged on the inlet side and the exhaust side, respectively, in opposite positions across the cam shaft 11 and parallel to the cam shaft 11. The rocker shaft 17 on the inlet side has a rocker arm 19 for low speed and a rocker arm 21 for high speed, which are the seesaw type, mounted thereon to be rockable about the axis of the rocker shaft 17. The rocker shaft 17 on the exhaust side has a rocker arm 22 of the seesaw type mounted thereon to be rockable about the axis of the rocker shaft 17. The rocker arm 19 for low speed has a needle roller 25 at one end thereof which contacts the cam 13 for low speed, and has an adjust screw 27 at the other end which contacts a valve stem end of the inlet valve 7. The rocker arm 22 has the same construction as the rocker arm 19 for low speed, except that a through-bore (33) to be described hereinafter is not provided. In the following description, the inlet valve will be described by way of example, but the present invention is applicable also to the drive system for the exhaust valve.

The rocker arm 21 for high speed has a needle roller 29 at one end thereof which contacts the cam 15 for high speed. The rocker arm 21 for high speed has the needle roller 29 biased toward the cam 15 for high speed by a lost motion spring 31.

In an upper portion of the rocker arm 19 for low speed, which is located above the rocker shaft 17, a through-bore 33 is formed to extend parallel to the rocker shaft 17. A connecting pin 37 is inserted in this through-bore 33 through a compression spring 35. The connecting pin 37, while being inserted in the through-bore 33 (penetrating opening) to be movable forward and backward, is biased backward by the compression spring 35. The connecting pin 37 is formed longer than the width of the rocker arm 19 for low speed. Therefore, when moved forward by a mechanism to be described hereinafter, its forward end advances from a side surface of the rocker arm 19 for low speed to the rocker arm 21 for high speed.

On an upper portion of the rocker arm 21 for high speed, which is located above the rocker shaft 17, an engaging portion 39 (interlocking portion) is formed. This engaging portion 39 has a cutout formed in a position thereof facing away from the cam shaft 11, that is a position opposed to the adjust screw 27 of the rocker arm 19 for low speed.

In a state where the connecting pin 37 is not moved forward, the rocker arm 21 for high speed swung (oscillated) by the cam 15 for high speed performs idle rocking, without engaging (interlocking) with the rocker arm 19 for low speed (that is, only swung by the cam 15 for high speed, and does not move the rocker arm 19 for low speed). Subsequently, the inlet valve 7 is pushed through the rocker arm 19 for low speed swung by the cam 13 for low speed, to be lifted toward the combustion chamber 5. On the other hand, when the connecting pin 37 is moved forward, its forward end will be engaged by the engaging portion 39. Therefore, the rocker arm 21 for high speed is swung in response to rotation of the cam 15 for high speed, which swings the rocker arm 19 for low speed to lift the inlet valve 9.

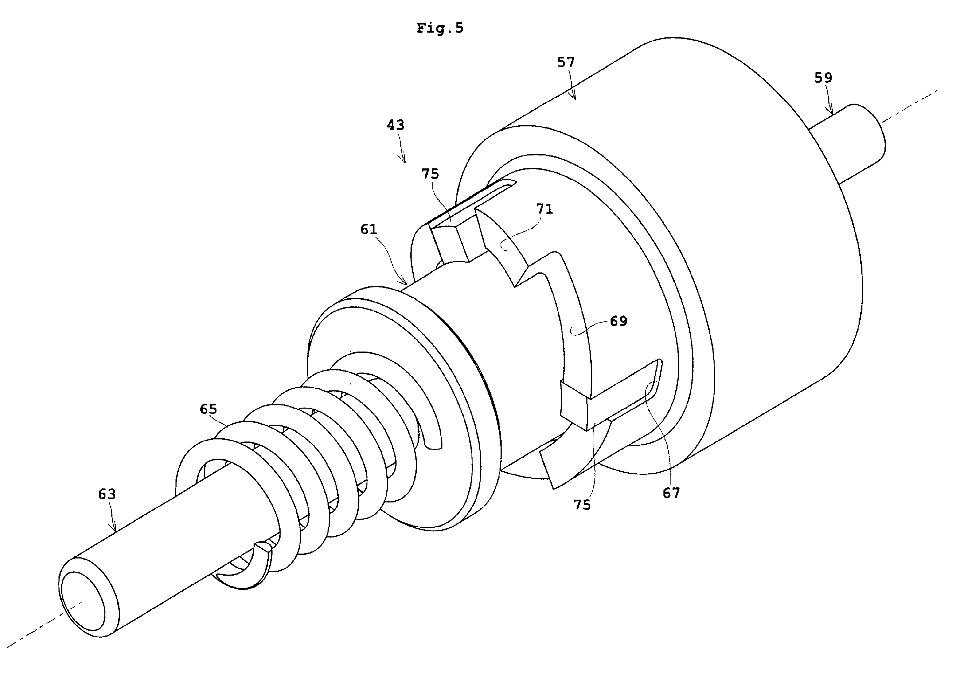

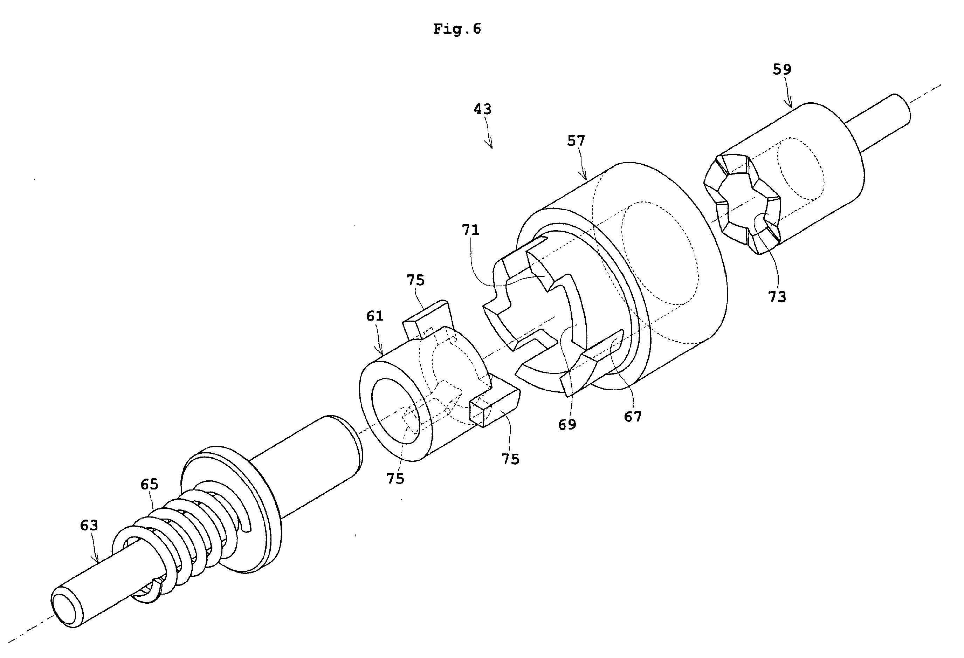

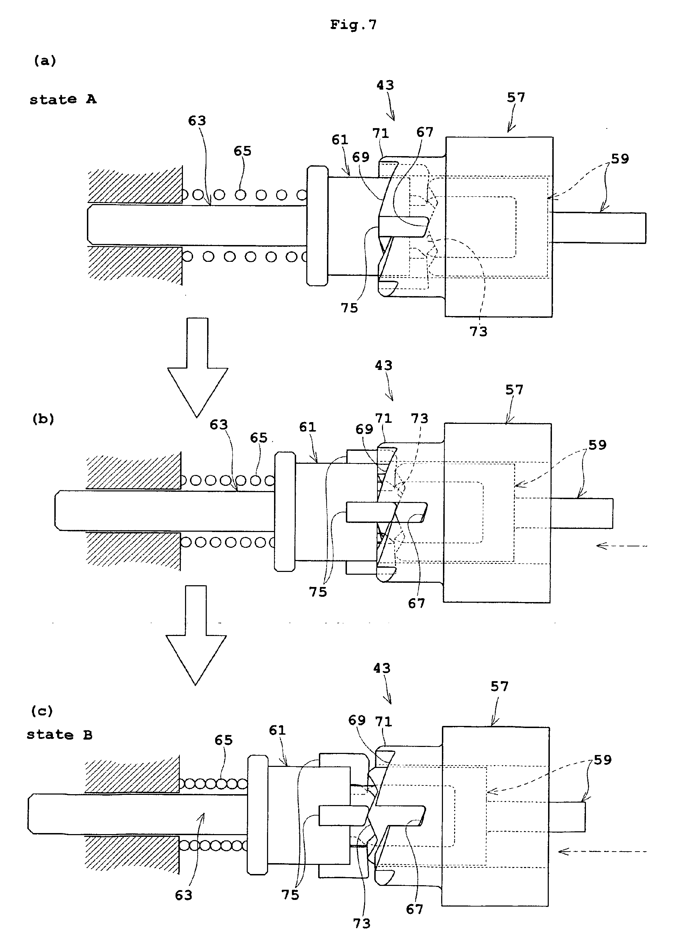

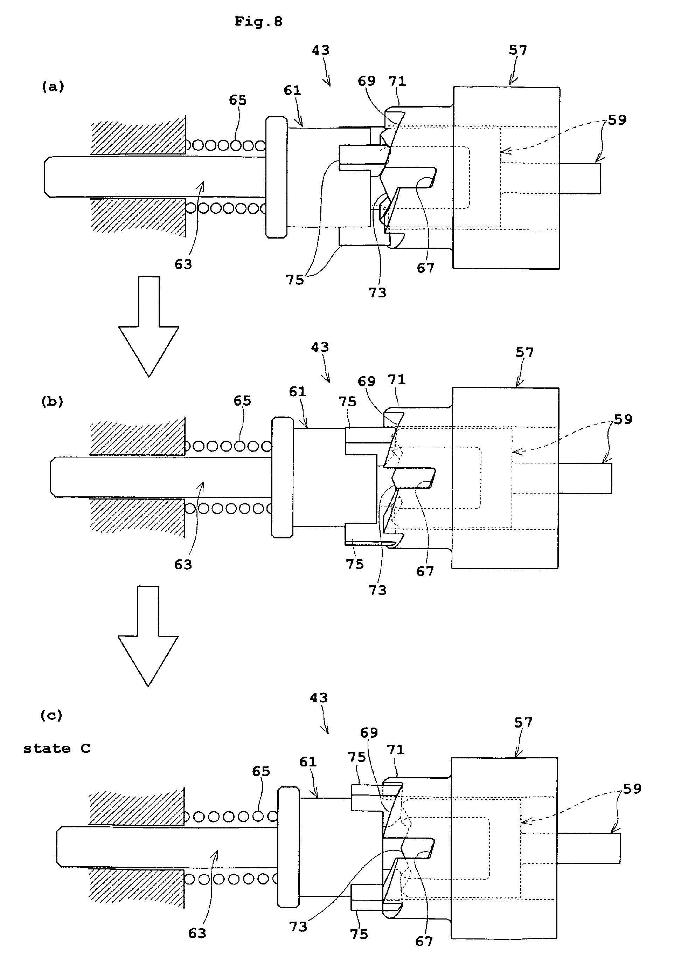

Next, a construction for driving the above connecting pin 37 forward and backward will be described. Fig. 5 is a perspective view showing a state holding mechanism. Fig. 6 is an exploded perspective view of the state holding mechanism. Figs. 7 are views for illustrating operation of the state holding mechanism, in which (a) shows an initial position, (b) shows a transition position from the initial position, and (c) shows a most forward position. Figs. 8 are views for illustrating operation of the state holding mechanism, in which (a) and (b) show transition positions from the most forward position, and (c) shows a forward position.

The connecting pin 37 is driven forward and backward by an actuator 41, a state holding mechanism 43 and a direction switching lever 45.

The actuator 41 is constructed of a push type electromagnetic solenoid, for example, which, by being de-energized after being energized, drives an actuating piece 47 at the forward end of a plunger forward or backward to an initial position and a forward position. The direction switching lever 45 is provided between the state holding mechanism 43 and connecting pin 37. This direction switching lever 45 is L-shaped in plan view. The direction switching lever 45 has an axis of rotation 51 between one end 48 and the other end 49 thereof, and the one end 48 and other end 49 rock about the axis of rotation 51. The one end 48 of the direction switching lever 45 is in contact with the state holding mechanism 43, while the other end 49 is in contact with the connecting pin 37. The other end 49 and the axis of rotation 51 of the direction switching lever 45 are housed in a cam cover 53 (see Figs. 1 and 3). On the other hand, the one end 48 of the direction switching lever 45 is arranged, along with the state holding mechanism 43 and actuator 41, above the cam cover 53. Although not shown, an area above the cam cover 53 is covered with a top cover.

The actuator 41 is disposed in a direction to have a direction of movement (operating direction) of the actuating piece 47 crossing at right angles to the axis of the cylinder (not shown) disposed under the cylinder head 3. Examples of arrangement of the actuator 41 will be described in detail hereinafter.

The state holding mechanism 43 is housed in a cover projection 55. The state holding mechanism 43 is constructed of a knock rotating ratchet mechanism, for example. Specifically, as shown in Figs. 5 and 6, it has an outer fixed tube 57, a pressing member 59 inserted into the interior from a rear end of the outer fixed tube 57, a rotating tube 61 inserted into the interior from a forward end of the outer fixed tube 57, a forward end member 63 inserted from a forward end of the rotating tube 61, and a spring 65 for biasing the forward end member 63 toward the pressing member 59.

The outer fixed tube 57 has deep grooves 67, inclined grooves 69 and locking (engaging and stopping) portions 71 formed on an annular portion at the forward end thereof. The inclined grooves 69 adjoin the deep grooves 67. The locking portions 71 are formed between the inclined grooves 69 and deep grooves 67. The pressing member 59 has triangular pressing and sliding surfaces 73 formed on an annular portion at the forward end thereof. The rotating tube 61 has locking lugs 75 projecting circumferentially from a rear end thereof.

When the actuating piece 47 of the actuator 41 is moved forward and backward, the state holding mechanism 43 constructed as described above will operate as shown in Figs. 7 and 8.

It is assumed that, in an initial state, as shown in Fig. 7 (a), the locking lugs 75 of the rotating tube 61 are fitted in the deep grooves 67 of the outer fixed tube 57. This is regarded as "state A". When the actuating piece 47, not shown, is moved forward at this time, the pressing member 59 will move toward the forward end of the outer fixed tube 57 (Fig. 7 (b)). At this time, the locking lugs 75 of the rotating tube 61 are pushed out by vertexes of the triangular pressing and sliding surfaces 73, and the rotating tube 61 is moved toward the forward end (Fig. 7 (c)). This is regarded as "state B". Next, when the actuating piece 47 begins to return, the rotating tube 61 has its locking lugs 75 slide on the triangular pressing and sliding surfaces 73, with addition of the repulsive force of the spring 65, and is rotated clockwise as seen from the pressing member 59 (Fig. 7 (c), Fig. 8 (a)). During this process, the locking lugs 75 leave the pressing and sliding surfaces 73 of the pressing member 59 and ride on the inclined grooves 69 of the outer fixed tube 57. Further, as the actuating piece 47 returns to the original position, with addition of the repulsive force of the spring 65, they make sliding movement on the inclined grooves 69 toward the locking portions 71 of the outer fixed tube 57 (Figs. 8 (b) and (c)). This is regarded as "state C". When the actuating piece 47 of the actuator 41 is moved again, the locking lugs 75 in state C will override the locking portions 71 and enter the deep grooves 67 to assume state A.

Thus, when the actuating piece 47 of the actuator 41 is moved forward and backward, the forward end member 63 will be changed from state A through state B to state C. When the actuating piece 47 is moved again, it will be changed from state C through state B to state A. At this time, in state A and state C, these states are held even if the actuator 41 is not operated.

When the forward end member 63 is moved as described above, the one end 48 of the direction switching lever 45 will be moved as shown in two-dot chain line from a state shown in a solid line in Fig. 3. That is, in state A, the other end 49 maintains a state where the connecting pin 37 is moved backward away from the rocker arm 21 for high speed, and in state C, it maintains a state where the connecting pin 37 is moved forward toward the rocker arm 21 for high speed. Therefore, the connecting pin 37 can be moved forward by operating the actuator 41 and then putting it out of operation, and the connecting pin 37 can be moved backward by similarly operating the actuator 41 and then putting it out of operation. In other words, the rocker arm 21 for high speed can be connected to the rocker arm 19 for low speed by operating the actuator 41 and then putting it out of operation. The connection between the rocker arm 19 for low speed and the rocker arm 21 for high speed can be canceled by operating the actuator 41 and then putting it out of operation.

In the embodiment described above, when the actuator 41 is operated to switch between the rocker arm 19 for low speed and the rocker arm 21 for high speed, the actuating piece 47 is moved to a different position to engage the connecting pin 37 with the rocker arm 21 for high speed. At this time, even if the actuator 41 is put out of operation, the state holding mechanism 43 holds each position of the forward end member 63, thereby holding the position of the connecting pin 37. Therefore, there occurs no power consumption for maintaining the state where switching is made to the rocker arm 21 for high speed, and also measures against heat are unnecessary. This realizes a variable valve apparatus having very high implementability.

When the push type electromagnetic solenoid is used as the actuator 41, energization moves the actuating piece 47 forward from the initial position to the operative position, and de-energization moves the actuating piece 47 backward from the operative position to the initial position. At this time, the forward end member 63 of the state holding mechanism 43 moves between state A and state C through state B in response to positions of the actuating piece 47. However, the position of the forward end member 63 is held in state C by the ratchet even if the actuator 41 is put out of operation. Moreover, when moving the forward end member 63 to state C, what is necessary is only to turn ON the actuator 41, and also when returning the forward end member 63 to state A, what is necessary is only to turn ON the actuator 41. Therefore, it is not necessary to carry out complicated drive such as driving by opposite polarity the push type electromagnetic solenoid acting as the actuator 41, which can simplify control. As a result, the rocker arm 19 for low speed and the rocker arm 21 for high speed can be switched easily.

Since the direction switching lever 45 is disposed between the connecting pin 37 and state holding mechanism 43, an increased degree of freedom is provided for the attachment position of the actuator 41. The actuator 41 can therefore be disposed to have the axis of actuating piece 47 crossing at right angles to the axis of the cylinder as noted hereinbefore. Therefore, adverse influences of vibration caused by reciprocation of the piston are prevented from acting on the actuator 41 and state holding mechanism 43.

The above embodiment has been described taking the push type electromagnetic solenoid as an example of the actuator 41. However, the present invention can be implemented by using a pull type electromagnetic solenoid instead of the push type electromagnetic solenoid. With the pull type electromagnetic solenoid, the actuating piece 47 moves backward when ON and the actuating piece 47 moves forward when OFF. Therefore, the arrangement position of the actuator 41 in the above embodiment may be shifted from the axis of the state holding mechanism 43, with the actuator 41 disposed adjacent one end of a seesaw lever across its pivot axis, the actuating piece 47 of the actuator 41 connected to the one end, and the state holding mechanism 43 located adjacent the other end.

The foregoing embodiment has been described taking an example of the present invention being applied to the inlet side, but it is applicable also to the exhaust side. Further, the present invention is not limited to particular numbers of inlet valves 7 and exhaust valves 9.

### <Variable Valve Apparatus> Embodiment 2

Next, Embodiment 2 of the variable valve apparatus will be described with reference to the drawings. Only an actuator 76 and a state holding mechanism 77 of the variable valve apparatus will be described. In this Embodiment 2, a direct drive mode for directly driving the connecting pin 37, with the direction switching lever 45 omitted, will be described. However, an indirect drive mode using the direction switching lever 45 may be employed as in Embodiment 1 described hereinbefore.

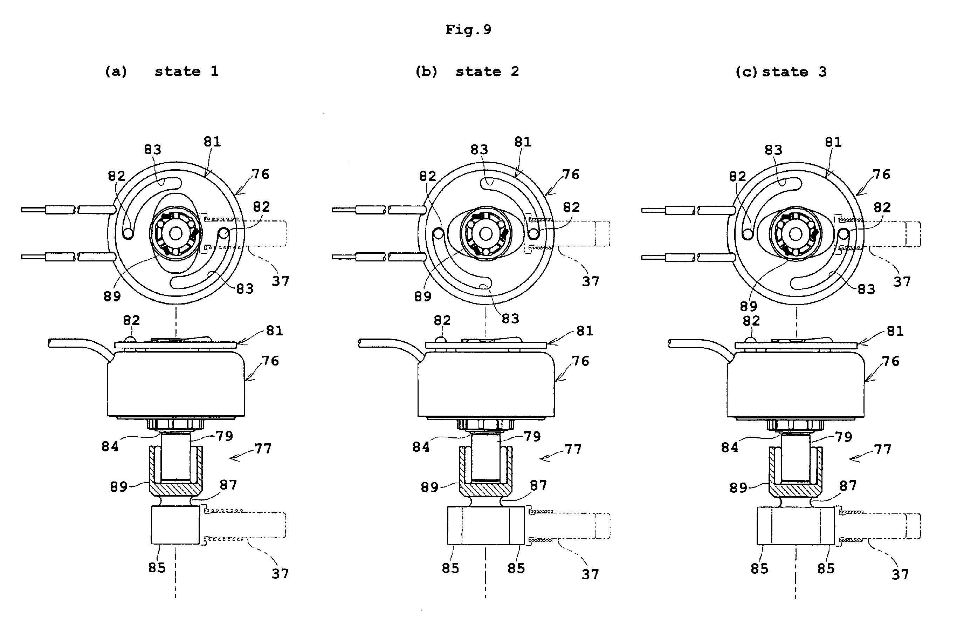

Figs. 9 are views showing an outline construction of a state holding mechanism according to Embodiment 2, in which (a) shows an initial position, (b) shows an action position (operative time), and (c) shows an action position (inoperative time). The upper figures are front views, and the lower figures plan views.

This actuator 76 is constructed of a rotary type electromagnetic solenoid, for example, which has an actuating piece 79 rotatable about its axis. In this example, the actuating piece 79 is rotatable counterclockwise as seen from the front. The state holding mechanism 77 is connected to the actuating piece 79 to be rotatable with the actuating piece 79, and has a restricting plate 81 which restricts rotation of the actuating piece 79 to 90 degrees. The restricting plate 81 is disk-shaped, and has two restricting grooves 83 with stationary restricting members 82 inserted therein. The restricting members 82 are fixed to an end of the actuator 76 remote from the actuating piece 79. The two restricting grooves 83 are formed in opposite positions across the actuating piece 79, and are formed over a range of 90 degrees from the central position. A return spring 84 is mounted around the actuating piece 79 for biasing the actuating piece 79 from an operative position to an initial position. The actuating piece 79 has a cam shaft 87 attached to a forward end thereof and having cams 85 in two opposite directions. Between this cam shaft 87 and actuating piece 79, a clutch 89 is provided which permits rotation of the cam shaft 87 in a direction of rotation of the actuating piece 79, and prevents rotation of the cam shaft 87 in a direction opposite to the direction of rotation of the actuating piece 79.

The return spring 84 corresponds to the "biasing device" in this invention.

With the actuator 76 constructed in this way, when energized to operate from "state 1" which is an initial state (Fig. 9 (a)), the actuating piece 79 rotates about the axis, but is forcibly stopped at a rotation angle of 90 degrees which is in "state 2" (from Fig. 9 (a) to Fig. 9 (b)) by the restricting plate 81. In this state 2, one of the cams 85 moves the connecting pin 37 forward to the operative position. When the energization is subsequently stopped, the actuating piece 79 will be returned to the initial position by the return spring 84. However, since the clutch 89 is interposed, the cam 85 can be held in that state, i.e. in "state 3" (Fig. 9 (c)).

By operating the actuator 76 as described above, the connecting pin 37 can be moved forward toward the rocker arm 21 for high speed, and can be moved backward away from the rocker arm 21 for high speed. Therefore, it is not necessary to carry out complicated drive such as driving by electrically opposite polarity the rotary type electromagnetic solenoid acting as the actuator 41, which can simplify control. As a result, the rocker arm 19 for low speed and the rocker arm 21 for high speed can be switched easily.

In Embodiment 2 described above, although the direction of rotation of the actuating piece 79 is counterclockwise, it may be clockwise.

Foregoing Embodiments 1 and 2 have described taking the case of two rocker arms for example, but the number may be three or more. This may be realized by constructing the actuating piece of the state holding mechanism to be movable forward to two or more stages from the initial position, and by constructing also the actuator with the actuating piece movable forward to two or more stages from the initial position.

### <Engine>

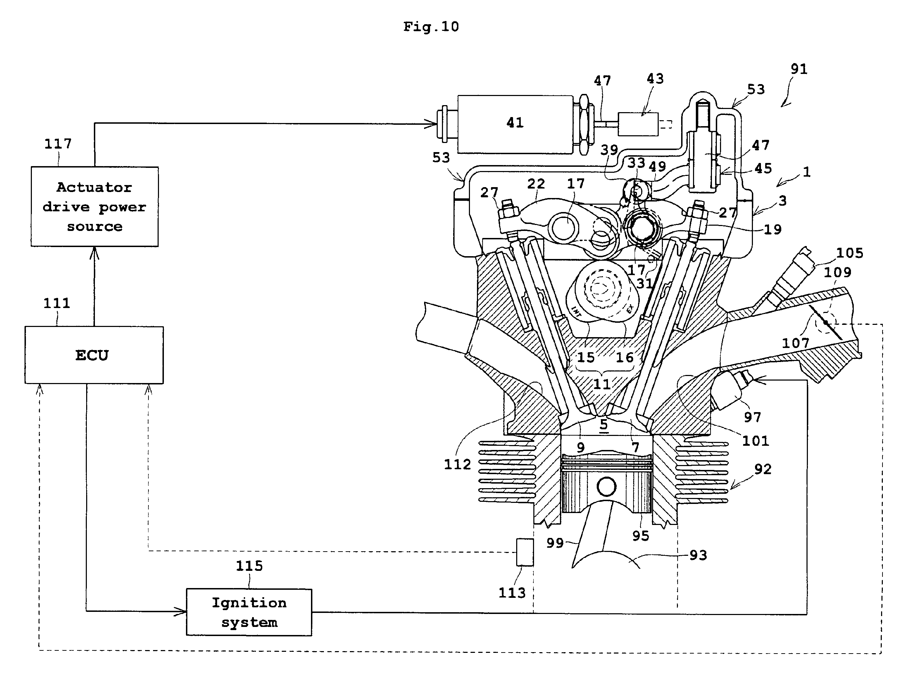

Next, an example of engine having the foregoing variable valve apparatus will be described with reference to Fig. 10. Fig. 10 is a view showing an outline construction of an engine having the state holding mechanism according to Embodiment 1.

This engine 91 includes a cylinder 92, the cylinder head 3 described hereinbefore, a crankshaft 93, a piston 95 and a spark plug 97.

The piston 95 in the cylinder 92 is connected to the crankshaft 93 through a connecting rod 99. A fuel feed system 105 (also called an injector) is attached to an inlet pipe 103 communicating with an inlet port 101. The inlet pipe 103 has, mounted therein, a throttle valve 107 which opens and closes in response to a control amount of an accelerator provided on a grip not shown, for example, and an accelerator sensor 109 which outputs a signal corresponding to an opening degree of the valve. The signal from this accelerator sensor 109 is taken into an ECU 111. An exhaust port 112 is formed on an opposite side of the inlet port 101. The fuel feed system 105 may be replaced with a carburetor.

A rotation angle detecting device 113 is attached to the cylinder 92 for detecting a rotation angle of the crankshaft 93. The rotation angle (crank angle) of the crankshaft 93 is detected based on an output signal of the rotation angle detecting device 113, which enables the ECU 111 to determine an operating condition (operational state) of the engine 91.

The ECU 111 controls an ignition system 115 to adjust the timing of ignition according to the operating condition. Further, it controls an actuator drive power source 117 according to the operational state to control the actuator 41 as described above. This carries out control for switching the rocker arm 19 for low speed and the rocker arm 21 for high speed according to the operational state.

Since this engine 91 has the variable valve apparatus 1, there occurs no power consumption for maintaining the state where the rocker arm 19 for low speed and the rocker arm 21 for high speed are switched, and also measures against heat are unnecessary, which provide for a very high practicability. Therefore, an improvement in fuel consumption of the engine 91 can be expected.

The actuator 41 is attached as follows.

That is, the actuator 41 is attached such that an imaginary plane perpendicular to the axis of the cylinder 92 is parallel to the operating direction of the actuating piece 47. Further, the actuator 41 is attached such that the operating direction of the actuating piece 47 is in agreement with a direction perpendicular to a main component direction of vibration produced by the piston/crank line of the engine 91. With such arrangement of the actuator 41, since the vibration from the engine 91 is not in agreement with the operating direction of the actuator 41, this vibration can be prevented from exerting adverse influences on operation of the actuator 41. Such various examples of arrangement of the actuator 41 will be described in detail hereinafter.

Incidentally, when the engine 91 is a small displacement single cylinder, the direction of the axis of the cylinder 92 is the main component direction of vibration of the engine 91. Therefore, the same effect as above is produced if the actuator 41 is attached so that the actuating piece 47 is located in a direction perpendicular to the axis of the cylinder 92. This applies also the following examples 2-4 of arrangement.

The actuator 41 of the variable valve apparatus 1 provided for the above engine 91 may be replaced with the actuator 76 described in Embodiment 2. In that case, the direction switching lever 45 can be omitted to simplify the construction. As noted above, the actuator 76 should preferably be arranged by taking account of the operating direction of the actuating piece 79 and the direction of vibration from the engine 91.

### <Two-wheeled motor vehicle>

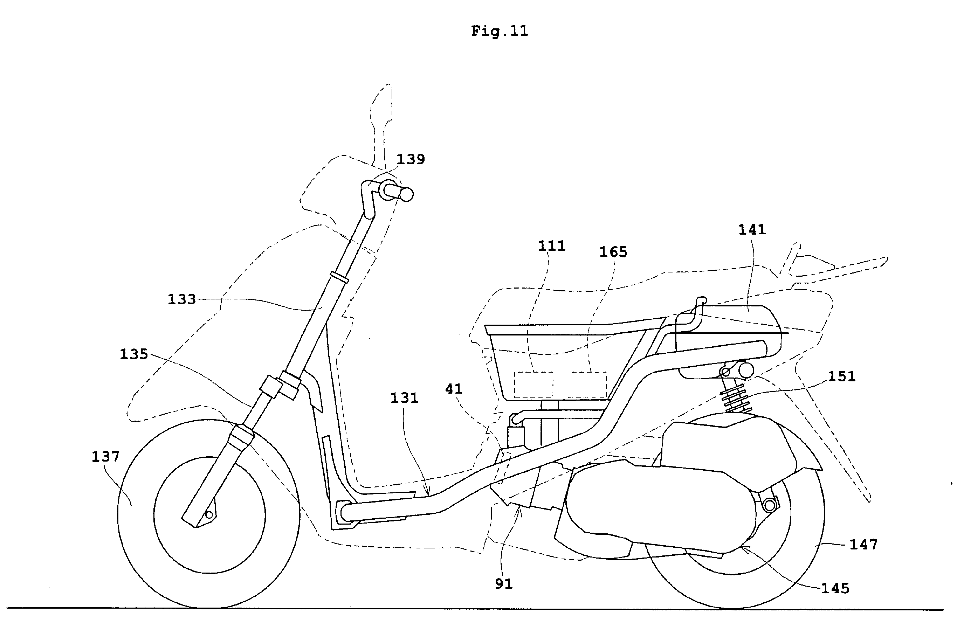

A two-wheeled motor vehicle (scooter type vehicle) will be described with reference to Fig. 11, as an example of saddle riding type vehicle having the foregoing variable valve apparatus. Fig. 11 is a view showing an outline construction of a two-wheeled motor vehicle having the engine of Fig. 10. In Fig. 11, two-dot chain lines show an outward form.

A main frame 131 includes a head pipe 133 disposed at the front end thereof. A front fork 135 is attached to the head pipe 133 to be rockable right and left. A front wheel 137 is rotatably attached to lower ends of the front fork 135. A steering handle 139 is attached to the upper portion of the front fork 135.

A fuel tank 141 is mounted at the rear end of the main frame 131. A power transmission device 145 is attached under the main frame 131 to be rockable relative to the main frame 131. A rear wheel 147 is rotatably attached to the rear end of this power transmission device 145. At the rear end of the power transmission device 145, a rear suspension 151 is provided as held (supported in an interposed state) between the main frame 131 and power transmission device 145.

The engine 91 described above is disposed between the main frame 131 and power transmission device 145.

The ECU 111 and a battery 165 are mounted in a space above the engine 91.

The above power transmission device 145 corresponds to the "transmission mechanism" in this invention.

With the above construction, a fuel-efficient two-wheeled motor vehicle can be realized by transmitting power generated by the engine 91, for which improved fuel consumption can be expected, to the rear wheel 147 through the power transmission device 145.

Although the two-wheeled motor vehicle has been described by taking a scooter type vehicle for example, the two-wheeled motor vehicle may be different from this type.

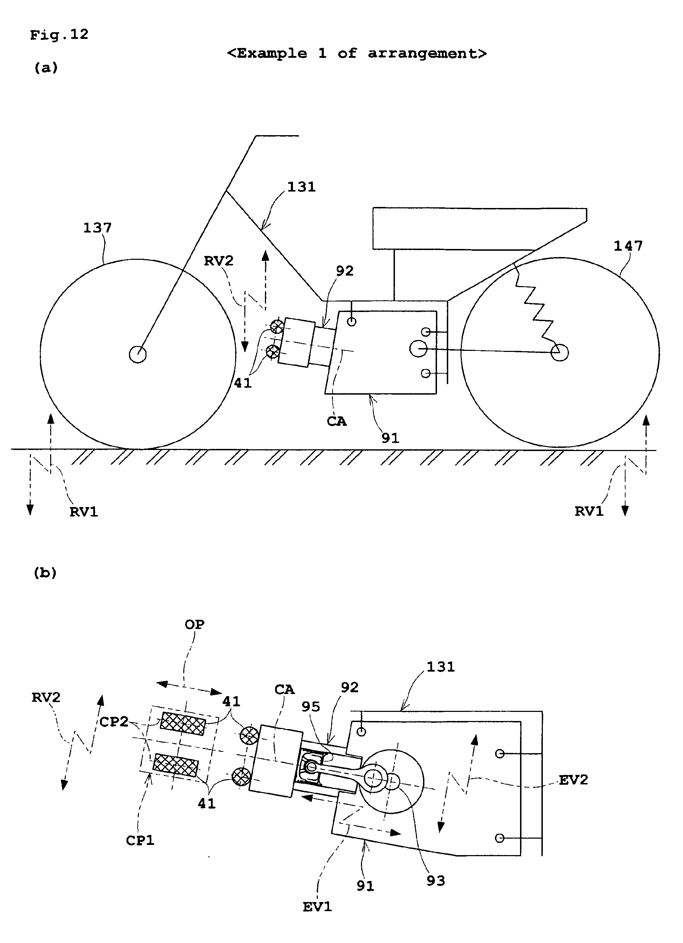

Next, desirable examples of arrangement of the actuator 41 on saddle riding type vehicles of various types will be described with reference to Figs. 12 - 15.

### <Example 1 of arrangement> Mopet and two-wheeled motor vehicle type

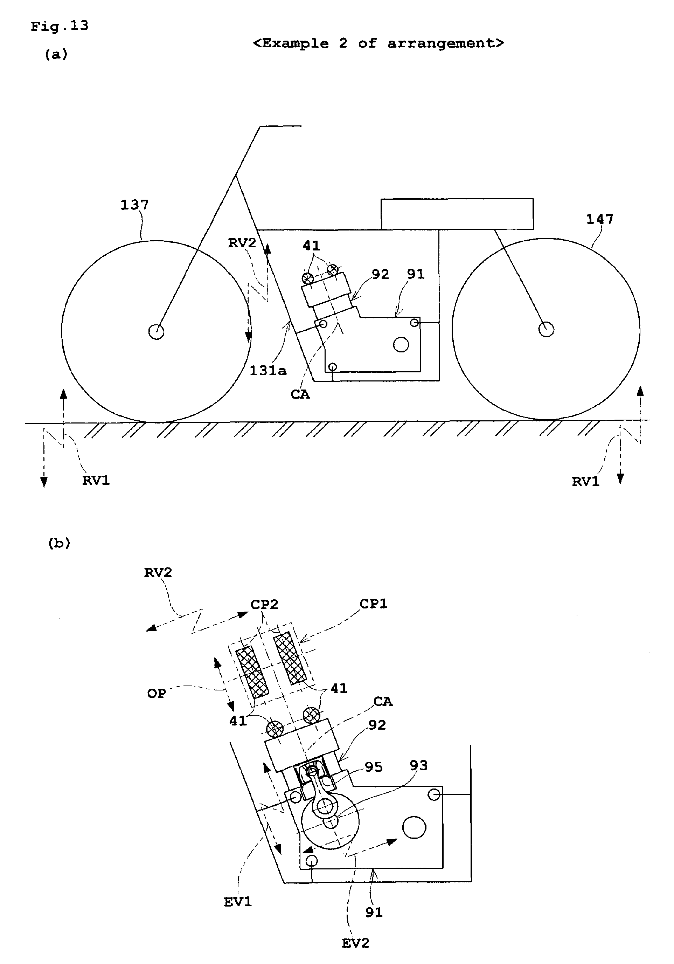

Reference is made to Figs. 12. Figs. 12 are schematic views showing desirable example 1 of arrangement of the actuator 41, in which (a) shows a relationship with a vibrating direction of a vehicle body, and (b) shows a relationship with a vibrating direction of the engine. The figures depict two actuators 41, and this indicates that two actuators 41 may be provided or one actuator 41 may be provided in any one position. This applies also to Figs. 13 - 15 to follow.

This saddle riding type vehicle has a construction found in what is called a mopet and a two-wheeled motor vehicle. Specifically, as shown in Fig. 12 (a), the engine 91 is fixed attached as suspended from the main frame 131 which corresponds to the "vehicle body". The engine 91 has the forward end of a cylinder 92 directed toward the front wheel 137. In the case of the saddle riding type vehicle having such construction, the main frame 131 receives vibration, which has a direction RV1, from a road surface at the time of traveling. Therefore, the forward end of the cylinder 92 of the engine 91 fixed attached to the main frame 131 receives vibration (in other words, a load), which has a direction RV2, at the time of traveling. However, since the vibrating direction RV1 may occur from each of the front wheel 137 and rear wheel 147, the vibrating direction RV2 represents a rough direction.

As shown in Fig. 12 (b), with the engine 91 having the horizontal cylinder 92, the main component directions of vibration produced by the cylinder 92 / crankshaft 93 are directions EV1 and EV2. These main component directions EV1 and EV2 of the vibration, to be strict, vary with the construction of engine 91. However, a large part thereof has the main component direction EV1 in the direction of the cylinder 92. The main component directions EV 1 and EV2 of the vibration, although the component directions of the vibration are diverse, refer to directions of vibration forming the largest components when the above are combined. Sign CA denotes a direction of reciprocation of the piston 95 and indicates the axis of the cylinder 92. Sign CP1 indicates an imaginary plane perpendicular to the axis of the cylinder 92. For the purpose of illustration, plane CP1 is presented as seen from the forward end of the cylinder 92. Sign CP2 indicates an imaginary plane perpendicular to the vibrating direction RV2. For the purpose of illustration, plane CP2 is presented as a straight chain line. The vibrating direction RV2 in Fig. 12 (b) is a vibrating direction RV2 seen from the forward end of the cylinder 92. Therefore, the vibrating direction RV2 of Fig. 12 (a) disagrees with the vibrating direction RV2 of Fig. 12 (b).

With the saddle riding type vehicle having such construction, the actuator 41 will receive vibrations in the vibrating direction RV2 received by the engine 91 from the road surface at the time of traveling and in the main component direction EV1 of the vibration due to the cylinder 92 / crankshaft 93. So, assuming the plane CP1 perpendicular to the axis of the cylinder 92, it is preferable to provide the actuator 41 so that the plane CP1 and operating direction OP of the actuating piece 47 of the actuator 41 become parallel. Further, it is preferable to provide the actuator 41 for the engine 91 in such an arrangement that the operating direction OP of the actuating piece 47 of the actuator 41 corresponds to a direction perpendicular to the main component directions EV1 and EV2 of vibration. Further, it is preferable to attach the actuator 41 so that the imaginary plane CP2 perpendicular to the vibrating direction RV2 occurring at the time of traveling and the operating direction OP of the actuating piece 47 of the actuator 41 become parallel.

With such arrangement, since the main component directions EV1 and EV2 of the vibration from the engine 91 are not in agreement with the operating direction of the actuator 41, this vibration can be prevented from exerting adverse influences on operation of the actuator 41. Further, since the direction RV2 of the vibration occurring at the time of traveling is not in agreement in the operation direction of the actuator 41, this vibration can also be prevented from exerting adverse influences on operation of the actuator 41.

In other words, since the actuator 41 is not easily be influenced by vibration, the load of the spring for biasing the electromagnetic solenoid can be reduced. This can reduce the drive of the electromagnetic solenoid, and can inhibit power consumption.

### <Example 2 of arrangement> Mopet and two-wheeled motor vehicle type

Reference is made to Figs. 13. Figs. 13 are schematic views showing desirable example 1 of arrangement of the actuator, in which (a) shows a relationship with a vibrating direction of a vehicle body, and (b) shows a relationship with a vibrating direction of an engine.

This saddle riding type vehicle has a construction found in what is called a mopet and a two-wheeled motor vehicle. Specifically, as shown in Fig. 13 (a), the engine 91 is fixed attached as mounted on a down tube 131 a of the main frame 131. The engine 91 has the forward end of the cylinder 92 directed upward. In the case of such saddle riding type vehicle, the vibration received at the time of traveling has a direction RV1, and the vibration received by the engine 91 has a direction RV2.

As shown in Fig. 13 (b), with the engine 91 having the vertical cylinder 92, the main component directions of vibration produced by the cylinder 92 / crankshaft 93 are directions EV1 and EV2. As noted hereinbefore, a large part thereof has the main component direction EV1 in the direction of the cylinder 92. Sign CA indicates the axis of the cylinder 92, sign CP1 indicates an imaginary plane perpendicular to the axis of the cylinder 92, and sign CP2 indicates an imaginary plane perpendicular to the vibrating direction RV2. The vibrating direction RV2 in Fig. 13 (b) is a vibrating direction RV2 seen from an upper portion of the cylinder 92. Therefore, the vibrating direction RV2 of Fig. 13 (a) disagrees with the direction of Fig. 13 (b).

With such saddle riding type vehicle also, it is preferable to provide the actuator 41 so that the imaginary plane CP1 perpendicular to the axis of the cylinder 92 and the operating direction OP of the actuating piece 47 of the actuator 41 become parallel. Further, it is preferable to provide the actuator 41 for the engine 91 in such an arrangement that the operating direction OP of the actuating piece 47 of the actuator 41 corresponds to a direction perpendicular to the main component directions EV1 and EV2 of vibration. Further, it is preferable to attach the actuator 41 so that the imaginary plane CP2 perpendicular to the vibrating direction RV2 occurring at the time of traveling and the operating direction OP of the actuating piece 47 of the actuator 41 become parallel.

Adopting such construction can produce the same effects as Example 1 of arrangement described above.

### <Example 3 of arrangement> Swing unit (scooter type)

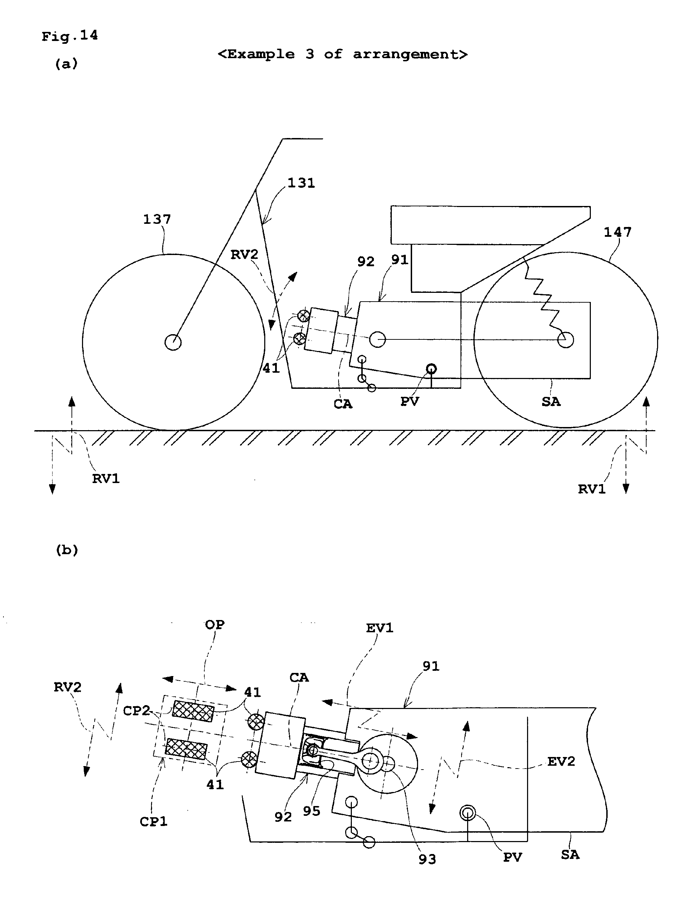

Reference is made to Figs. 14. Figs. 14 are schematic views showing desirable example 3 of arrangement of the actuator, in which (a) shows a relationship with a vibrating direction of a vehicle body, and (b) shows a relationship with a vibrating direction of an engine.

As shown in Fig. 14 (a), this saddle riding type vehicle has a swing arm SA attached to a pivot PV provided on the main frame 131. In this construction, the engine 91 also is attached to the pivot PV to be rockable with rocking of the swing arm SA. Such construction of what is called a swing unit is widely employed in scooter type vehicles. The engine 91 has the forward end of the cylinder 92 directed toward the front wheel 137. Vibration received at the time of traveling has a direction RV1, and vibration received by the forward end of the cylinder 92 at the time of traveling has a direction RV2 centering on the pivot PV.

As shown in Fig. 14 (b), with the engine 91 having the horizontal cylinder 92, as in Example 1 of arrangement, the main component directions of vibration produced by the cylinder 92 / crankshaft 93 are directions EV1 and EV2. As noted hereinbefore, a large part thereof has the main component direction EV1 in the direction of the cylinder 92. Sign CA indicates the axis of the cylinder 92, sign CP1 indicates an imaginary plane perpendicular to the axis of the cylinder 92, and sign CP2 indicates a plane perpendicular to the vibrating direction RV2. The vibrating direction RV2 in Fig. 14 (b) is a vibrating direction RV2 seen from an upper portion of the cylinder 92. Therefore, the vibrating direction RV2 of Fig. 14 (a) disagrees with the vibrating direction RV2 of Fig. 14 (b).

With such saddle riding type vehicle also, it is preferable to provide the actuator 41 so that the imaginary plane CP1 perpendicular to the axis of the cylinder 92 and the operating direction OP of the actuating piece 47 of the actuator 41 become parallel. Further, it is preferable to provide the actuator 41 for the engine 91 in such an arrangement that the operating direction OP of the actuating piece 47 of the actuator 41 corresponds to a direction perpendicular to the main component directions EV 1 and EV2 of vibration. Further, it is preferable to attach the actuator 41 so that the imaginary plane CP2 perpendicular to the vibrating direction RV2 occurring at the time of traveling and the operating direction OP of the actuating piece 47 of the actuator 41 become parallel.

Adopting such construction can produce the same effects as Examples 1 and 2 of arrangement described above.

### <Example 4 of arrangement> Swing unit (scooter type)

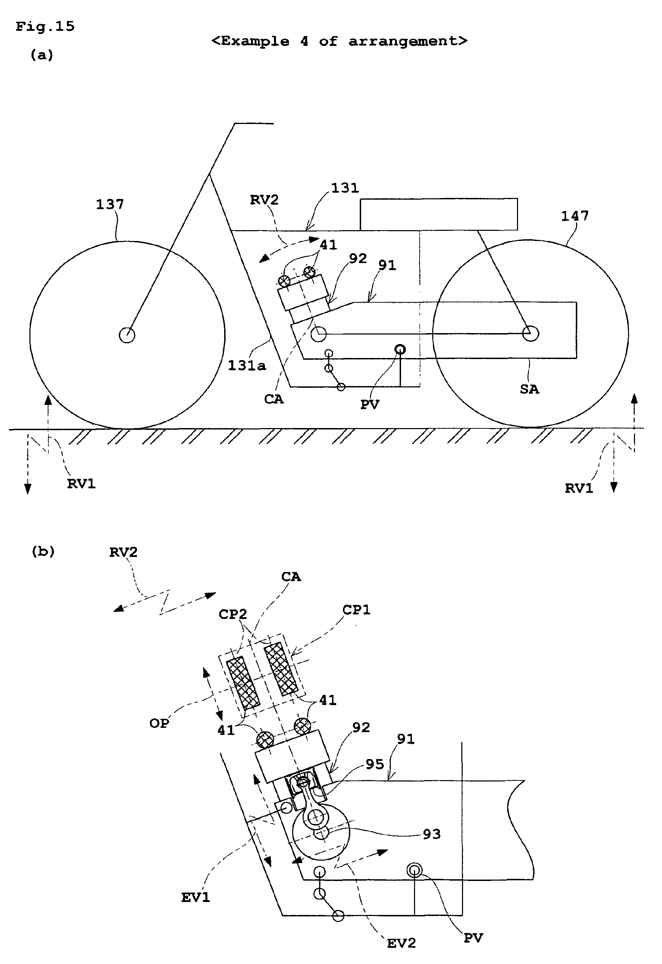

Reference is made to Figs. 15. Figs. 15 are schematic views showing desirable example 4 of arrangement of the actuator, in which (a) shows a relationship with a vibrating direction of a vehicle body, and (b) shows a relationship with a vibrating direction of an engine.

As shown in Fig. 15 (a), this saddle riding type vehicle has a swing arm SA attached to a pivot PV provided on a down tube 131 a of the main frame 131. In the construction of what is called a swing unit as in Example 3 of arrangement described above, the engine 91 also is attached to the pivot PV to be rockable with rocking of the swing arm SA. The engine 91 has the forward end of the cylinder 92 directed upward. In the case of such saddle riding type vehicle, vibration received at the time of traveling has a direction RV1, and vibration received by the engine 91 has a direction RV2.

As shown in Fig. 14 (b), with the engine 91 having the vertical cylinder 92, the main component directions of vibration produced by the cylinder 92 / crankshaft 93 are directions EV1 and EV2. A large part thereof has the main component direction EV1 in the direction of the cylinder 92. Sign CA indicates the axis of the cylinder 92, sign CP1 indicates an imaginary plane perpendicular to the axis of the cylinder 92, and sign CP2 indicates an imaginary plane perpendicular to the vibrating direction RV2. The vibrating direction RV2 in Fig. 15 (b) is a vibrating direction RV2 seen from an upper portion of the cylinder 92. Therefore, the vibrating direction RV2 of Fig. 15 (a) disagrees with the vibrating direction of Fig. 15 (b).

With such saddle riding type vehicle also, it is preferable to provide the actuator 41 so that the imaginary plane CP1 perpendicular to the axis of the cylinder 92 and the operating direction OP of the actuating piece 47 of the actuator 41 become parallel. Further, it is preferable to provide the actuator 41 for the engine 91 in such an arrangement that the operating direction OP of the actuating piece 47 of the actuator 41 corresponds to a direction perpendicular to the main component directions EV1 and EV2 of vibration. Further, it is preferable to attach the actuator 41 so that the imaginary plane CP2 perpendicular to the vibrating direction RV2 occurring at the time of traveling and the operating direction OP of the actuating piece 47 of the actuator 41 become parallel.

Adopting such construction can produce the same effects as Examples 1 - 3 of arrangement described above.

Although the mopet type, two-wheeled motor vehicle type and scooter type have been illustrated in the foregoing examples 1-4 of arrangement, the above examples 1-4 of arrangement are applicable also to saddle riding type vehicles of other forms.

In the foregoing examples 1-4 of arrangement, both the positional relationship with the plane CP1 perpendicular to the axis of the cylinder 92 and the positional relationship with the plane CP2 perpendicular to the vibrating direction RV2 are satisfied, it is sufficient to provide a construction which fulfills only the positional relationship with the plane CP1 perpendicular to the axis of the cylinder 92.

The foregoing examples 1-4 of arrangement have been described taking the case of the actuators 41 for example, but these apply also to the actuators 76. In that case, the same effects as above can be produced by arranging the actuators 76 so that a line linking two actuating pieces 79 become parallel to the operating direction OP noted hereinbefore.

Although a two-wheeled motor vehicle is shown as an example of the saddle riding type vehicle in the present invention, the invention may be applied to any vehicles carrying engines and ridable by persons in a straddling state. Such vehicles may be three-wheeled motorcycles, snowmobiles and so on. The three-wheeled motorcycles may be a three-wheeled motorcycle having two front wheels, or may be a three-wheeled motorcycle having two rear wheels.

### [INDUSTRIAL UTILITY]

As described above, the present invention is suitable for a variable valve apparatus for opening and closing valves provided for an internal combustion engine having the valves, and an engine having the same, and a saddle riding type vehicle having the same.

## Claims

1. A variable valve apparatus (1) for switching a plurality of rocker arms (19, 21), comprising:
a connecting pin (37) biased in a backward direction away from the rocker arms (19, 21), and driven forward to a rocker arm side to connect the plurality of rocker arms (19, 21);
an actuator (76) having an actuating piece (79), and operable to drive the actuating piece (79) to one of a plurality of different positions; and
a state holding mechanism (77) for driving the connecting pin (37) to the rocker arm side in response to a position of the actuating piece (79), and holding the connecting pin (37) in a forward position on the rocker arm side when the actuator (76) is rendered inoperative;
wherein the plurality of rocker arms (19, 21) are two;
**characterized in that**
the actuator (76) is a rotary type electromagnetic solenoid for rotating the actuating piece (79) about an axis thereof from an initial position to an actuating position; and
the state holding mechanism (77) has a biasing device (84) for biasing the actuating piece (79) from the actuating position to the initial position, a cam shaft (87) having cams (85) protruding in two radial directions of the cam shaft (87) and configured to rotate with the actuating piece (79) when it rotates from its initial position to its actuating position, and a clutch (89) interposed between the actuating piece (79) and the cam shaft (87), wherein the clutch is configured to permit rotation of the cams (85) in a direction of rotation of the actuating piece (79) from its initial position to its actuating position, and to prevent rotation of the cams (85) in the opposite direction of rotation when the actuating piece (79) rotates from its actuating position to its initial position.

2. The variable valve apparatus (1) according to claim 1, comprising a direction switching lever (45) disposed between the connecting pin (37) and the state holding mechanism (77), and having one end (48) located adjacent the state holding mechanism (77) and the other end (49) located adjacent the connecting pin (37), the direction switching lever (45) having an axis of rotation between the one end (48) and the other end (49).

3. An engine (91) having the variable valve apparatus (1) according to claim 1 or 2, wherein the actuator (76) is attached so that a plane (CP1) perpendicular to an axis (CA) of a cylinder (92) and an operating direction of the actuating piece (79) become parallel, and is attached to the variable valve apparatus (1) so that the operating direction (OP) of the actuating piece (79) agree with a direction perpendicular to a main component direction (EV1, EV2) of vibration produced by a piston/crank line of the engine (91).

4. An engine (91) having the variable valve apparatus (1) according to claim 1 or 2, wherein the actuator (76) is attached to the variable valve apparatus (1) so that an operating direction (OP) of the actuating piece (79) be located in a direction perpendicular to an axis (CA) of a cylinder (92).

5. A saddle riding type vehicle having the engine (91) according to claim 3 or 4, wherein the actuator (76) is attached to the variable valve apparatus (1) so that the operating direction (OP) of the actuating piece (79) become parallel to a plane (CP2) perpendicular to a direction in which a vehicle body vibrates (RV2) at traveling times.

6. A saddle riding type vehicle comprising:
the engine (91) according to claim 3 or 4;
a fuel tank (141) for storing fuel;
a front wheel (137) and a rear wheel (147); and
a transmission mechanism (145) for transmitting power generated by the engine (91) to the rear wheel (147).

## Patentansprüche

1. Variable Ventilvorrichtung (1) zum Umschalten zwischen einer Vielzahl von Kipphebeln (19, 21), die umfasst:
einen Verbindungsbolzen (37), der in einer Rückwärtsrichtung von den Kipphebeln (19, 21) weg gespannt und zu einer Seite der Kipphebel nach vorn bewegt wird, um die Vielzahl von Kipphebeln (19, 21) zu verbinden;
ein Betätigungselement (76), das ein Betätigungsteil (79) aufweist und in Funktion das Betätigungsteil (79) an eine einer Vielzahl unterschiedlicher Positionen bewegen kann;
einen Zustands-Haltemechanismus (77), mit dem der Verbindungsbolzen (37) in Reaktion auf eine Position des Betätigungsteils (79) zu der Seite der Kipphebel bewegt wird und der Verbindungsbolzen (37) an einer Vorwärts-Position an der Seite der Kipphebel gehalten wird, wenn das Betätigungselement (76) in den Ruhezustand versetzt wird;
wobei die Vielzahl von Kipphebeln (19, 21) zwei Kipphebel sind;
**dadurch gekennzeichnet, dass**
das Betätigungselement (76) ein Dreh-Elektromagnet ist, mit dem das Betätigungsteil (79) von einer Ausgangsposition um eine Achse desselben herum an eine Betätigungsposition gedreht wird; und
der Zustands-Haltemechanismus (77) eine Spanneinrichtung (84), mit der das Betätigungsteil (79) von der Betätigungsposition an die Ausgangsposition gespannt wird, eine Nockenwelle (87) mit Nocken (85), die in zwei radialen Richtungen der Nockenwelle (87) vorstehen und so eingerichtet sind, dass sie sich mit dem Betätigungsteil (79) drehen, wenn es sich von seiner Ausgangsposition an seine Betätigungsposition dreht, sowie eine Kupplung (89) aufweist, die zwischen dem Betätigungsteil (79) und der Nockenwelle (87) angeordnet ist, wobei die Kupplung so eingerichtet ist, dass sie Drehung der Nocken (85) in einer Drehrichtung des Betätigungsteils (79) von seiner Ausgangsposition an seine Betätigungsposition zulässt und Drehung der Nocken (85) in der entgegengesetzten Drehrichtung verhindert, wenn sich das Betätigungsteil (79) von seiner Betätigungsposition an seine Ausgangsposition dreht.

2. Variable Ventilvorrichtung (1) nach Anspruch 1, die einen Richtungs-Umschalthebel (45) umfasst, der zwischen dem Verbindungsbolzen (37) und dem Zustands-Haltemechanismus (77) angeordnet ist, dessen eines Ende (48) an den Zustands-Haltemechanismus (77) angrenzt und dessen anderes Ende (49) an den Verbindungsbolzen (37) angrenzt, wobei der Richtungs-Umschalthebel (45) eine Drehachse zwischen dem einen Ende (48) und dem anderen Ende (49) hat.

3. Motor (91) mit der variablen Ventilvorrichtung (1) nach Anspruch 1 oder 2, wobei das Betätigungselement (76) so angebracht ist, dass eine Ebene (CP1) senkrecht zu einer Achse (CA) eines Zylinders (79) und eine Arbeitsrichtung des Betätigungsteils (79) parallel sind, und es an der variablen Ventilvorrichtung (1) so angebracht ist, dass die Arbeitsrichtung (OP) des Betätigungsteils (79) mit einer Richtung senkrecht zu einer Hauptkomponenten-Richtung (EV1, EV2) von Schwingung übereinstimmt, die durch eine Kolben-Kurbelwellen-Linie des Motors (91) erzeugt wird.

4. Motor (91) mit der variablen Ventilvorrichtung (1) nach Anspruch 1 oder 2, wobei das Betätigungselement (76) so an der variablen Ventilvorrichtung (1) angebracht ist, dass eine Arbeitsrichtung (OP) des Betätigungsteils (79) in einer Richtung senkrecht zu einer Achse (CA) eines Zylinders (92) liegt.

5. Sattelsitz-Fahrzeug mit dem Motor (91) nach Anspruch 3 oder 4, wobei das Betätigungselement (76) so an der variablen Ventilvorrichtung (1) angebracht ist, dass die Arbeitsrichtung (OP) des Betätigungsteils (79) parallel zu einer Ebene (CP2) ist, die senkrecht zu einer Richtung (RV2) ist, in der der Fahrzeugkörper beim Fahren vibriert.

6. Sattelsitz-Fahrzeug, das umfasst:
den Motor (91) nach Anspruch 3 oder 4;
einen Kraftstofftank (141) zum Speichern von Kraftstoff;
ein Vorderrad (137) und ein Hinterrad (147); sowie
einen Übertragungsmechanismus (145) zum Übertragen durch den Motor (91) erzeugter Kraft auf das Hinterrad (147).

## Revendications

1. Appareil de soupape variable (1) pour commuter une pluralité de culbuteurs (19, 21), comprenant :
- une broche de connexion (37) sollicitée dans une direction vers l'arrière l'éloignant des culbuteurs (19, 21) et entrainée vers l'avant vers un côté d'un culbuteur pour connecter la pluralité de culbuteurs (19, 21) ;
- un actionneur (76) comportant une pièce d'actionnement (79) et utilisable pour entrainer la pièce d'actionnement (79) vers une d'une pluralité de positions différentes ; et
- un mécanisme de maintien d'état (77) pour actionner la broche de connexion (37) vers le côté d'un culbuteur en réponse à une position de la pièce d'actionnement (79) et maintenir la broche de connexion (37) dans une position vers l'avant sur le côté d'un culbuteur lorsque l'actionneur (76) est rendu inopérant,
- dans lequel la pluralité de culbuteurs (19, 21) sont deux ;
- **caractérisé en ce que** :
- l'actionneur (76) est un solénoïde électromagnétique de type rotatif pour entrainer en rotation la pièce d'actionnement (79) autour d'un axe de celui-ci d'une position initiale à une position d'actionnement ; et
- le mécanisme de maintien d'état (77) comporte un dispositif de sollicitation (84) pour solliciter la pièce d'actionnement (79) de la position d'actionnement à la position initiale, un arbre à cames (87) comportant des cames (85) faisant saillies dans deux directions radiales de l'arbre à cames (87) et configuré pour tourner avec la pièce d'actionnement (79) lorsqu'il tourne de sa position initiale à sa position d'actionnement, et un embrayage (89) interposé entre la pièce d'actionnement (79) et l'arbre à cames (87), dans lequel l'embrayage est configuré pour permettre une rotation des cames (85) dans une direction de rotation de la pièce d'actionnement (79) de sa position initiale à sa position d'actionnement et pour empêcher une rotation des cames (85) dans la direction opposée de rotation lorsque la pièce d'actionnement (79) tourne de sa position d'actionnement à sa position initiale.

2. Appareil de soupape variable (1) selon la revendication 1, comprenant un levier de commutation de direction (45) disposé entre la broche de connexion (37) et le mécanisme de maintien d'état (77) et comportant une première extrémité (48) située de manière adjacente au mécanisme de maintien d'état (77) et l'autre extrémité (49) située de manière adjacente à la broche de connexion (37), le levier de commutation de direction (45) comportant un axe de rotation entre la première extrémité (48) et l'autre extrémité (49).

3. Moteur (91) comportant l'appareil de soupape variable (1) selon les revendications 1 ou 2, dans lequel l'actionneur (76) est fixé de sorte qu'un plan (CP1) perpendiculaire à un axe (CA) d'un cylindre (92) et une direction de fonctionnement de la pièce d'actionnement (79) devienne parallèles, et est fixé à l'appareil de soupape variable (1) de sorte que la direction de fonctionnement (OP) de la pièce d'actionnement (79) concorde avec une direction perpendiculaire à une direction de composant principal (EV1, EV2) de vibration produite par une ligne de piston/vilebrequin du moteur (91).

4. Moteur (91) comportant l'appareil de soupape variable (1) selon les revendications 1 ou 2, dans lequel l'actionneur (76) est fixé à l'appareil de soupape variable (1) de sorte qu'une direction d'ouverture (OP) de la pièce d'actionnement (79) soit située dans une direction perpendiculaire à un axe (CA) d'un cylindre (92).

5. Véhicule de type monté à califourchon comportant le moteur (91) selon les revendications 3 ou 4, dans lequel dans lequel l'actionneur (76) est fixé à l'appareil de soupape variable (1) de sorte que la direction de fonctionnement (OP) de la pièce d'actionnement (76) devienne parallèle à un plan (CP2) perpendiculaire à une direction dans laquelle un corps de véhicule vibre (RV2) au moment de son cheminement.

6. Véhicule de type monté à califourchon, comprenant :
- un moteur (91) selon les revendications 3 ou 4 ;
- un réservoir de carburant (141) pour stocker du carburant ;
- une roue avant (137) et une roue arrière (147) ; et
- un mécanisme de transmission (145) pour transmettre la puissance générée par le moteur (91) à la roue arrière (147).
